# EUROPEAN PATENT SPECIFICATION

(11) **EP 3 291 715 B1**
(45) Date of publication and mention of the grant of the patent: **21.08.2019**
(21) Application number: 16719845.6
(22) Date of filing: 27.04.2016
(51) Int. Cl.: A47J 31/44

(54) **EMULSIFYING DEVICE FOR EMULSIFYING MILK AND COFFEE MACHINE COMPRISING SAID EMULSIFYING DEVICE FOR EMULSIFYING MILK**
EMULGIERVORRICHTUNG ZUM EMULGIEREN VON MILCH UND KAFFEEMASCHINE MIT DER EMULGIERVORRICHTUNG ZUM EMULGIEREN VON MILCH
DISPOSITIF D'ÉMULSION POUR L'ÉMULSION DE LAIT ET MACHINE À CAFÉ COMPRENANT LEDIT DISPOSITIF D'ÉMULSION PERMETTANT L'ÉMULSION DE LAIT

(30) Priority: 06.05.2015 IT MI20150641
(43) Date of publication of application: 14.03.2018
(73) Proprietor: De'Longhi Appliances S.r.l., 31100 Treviso (IT)
(72) Inventor: DE' LONGHI, Giuseppe, 31100 Treviso (IT); ZARATIN, Enrico, 31038 Paese (IT); PANCIERA, Antonio, 31030 Carbonera (IT)
(74) Representative: Rapisardi, Mariacristina
(86) International application number: PCT/EP2016/059365
(87) International publication number: WO 2016/177610

(56) References cited:
- EP-A1- 1 688 075
- EP-A1- 2 275 010
- EP-A1- 2 695 554
- WO-A1-2015/028592
- US-A- 5 509 349

## Description

The present invention refers to an emulsifying device for emulsifying milk and to a coffee machine that comprises said emulsifying device for emulsifying milk.

To date, there are coffee machines of the prior art that have milk emulsifying devices equipped with a mixing chamber where a flow of steam generates, by Venturi effect, a drop in pressure, which draws the air needed to emulsify the milk from a specific air supply line.

In some prior-art milk emulsifying devices such as cappuccino makers, the mixing chamber is immersed in a milk container where the milk is directly emulsified.

In other emulsifying devices, a milk container is provided that has a milk supply line in communication with the mixing chamber. In this case, the milk is also suctioned by Venturi effect into the mixing chamber, where it is emulsified and then dispensed externally. An emulsifying device of the prior art is disclosed in EP-A-1688075.

In both types of emulsifying devices, the degree of milk froth needs to be adjusted by changing the proportions between the flow of air and the flow of steam. Sometimes adjustment of the milk froth is carried out by means of specific adjustment knobs arranged on the air suction line.

Manual adjustment of the degree of milk froth depends on the user's ability.

For devices in which milk is emulsified inside the mixing chamber, solutions have been proposed in which a special valve actuated by a motor is positioned along the air supply line and suitably controlled by the controller of the coffee machine for throttling of the air flow. Basically, the valve has pre-established opening values, each value corresponding to a possible dispensing cycle selection on the part of the user.

In this manner, the milk frothing process can be carried out in an extremely precise manner and automatically without depending on the user's ability.

However, providing a motor for air flow adjustment can involve a significant increase in costs for the emulsifying device.

The technical task of the present invention is therefore to realize an emulsifying device for emulsifying milk that makes it possible to eliminate the cited technical drawbacks of the prior art.

Within the scope of this technical task, an aim of the invention is to realize an emulsifying device for emulsifying milk that makes it possible to accurately adjust the degree of milk froth regardless of the user's skills.

Another aim of the invention is to realize an emulsifying device for emulsifying milk that enables precise adjustment of the degree of froth of the milk, while proving to be simple in construction and low in cost.

The technical task, as well as these and other aims, according to the present invention, are achieved by realizing an emulsifying device for emulsifying milk comprising a Venturi mixing chamber, a circuit for supplying air and having an air outlet connected to the mixing chamber, and a circuit for supplying steam and having a steam outlet connected to the mixing chamber, characterized in that said circuit for supplying air comprises a first air inlet line equipped with a first shut-off solenoid valve and at least a second air inlet line equipped with a second shut-off solenoid valve, said first and second air inlet lines having a different minimum cross-sectional area.

In a preferred embodiment of the invention, the circuit for supplying air has a third air inlet line equipped with a third shut-off solenoid valve and having a minimum cross-sectional area differing from that of said first and second air inlet lines.

In a preferred embodiment of the invention, each air inlet line is equipped with a respective air filter.

In a preferred embodiment of the invention, said circuit for supplying air comprises a first section comprising said first air inlet line, said first solenoid valve, said at least a second air inlet line, and said at least a second solenoid valve, said first section being disconnectably connected to a second section comprising said air outlet.

In a preferred embodiment of the invention, said circuit for supplying steam comprises a first section comprising said steam inlet and disconnectably connected to a second section comprising said steam outlet.

The present invention also discloses a coffee machine that incorporates such an emulsifying device.

In a preferred embodiment of the invention, the coffee machine comprises an outer frame within which said first section of the circuit for supplying steam and said first section of the circuit for supplying air are mounted.

In a preferred embodiment of the invention, said second section of the circuit for supplying air, said second section of the circuit for supplying steam and said mixing chamber are mounted in a supporting body external to said frame.

In a preferred embodiment of the invention, said frame supports a connector arranged through the wall thickness of said frame and exhibiting a connection fitting between said first and second sections of the air circuit and a connection fitting between said first and second sections of the steam circuit.

In a preferred embodiment of the invention, said supporting body is disconnectably connected to said connector.

In a preferred embodiment of the invention, said supporting body is supported by a milk container having a milk supply line having a milk outlet connected to said mixing chamber.

In a preferred embodiment of the invention, the coffee machine has an internal controller programmed with a first, a second and at least a third milk dispensing program that differ in the status of at least one of the solenoid valves.

In a preferred embodiment of the invention, said internal controller is programmed with a washing program that differs in the status of at least one solenoid valve with respect to said first, second and at least a third milk dispensing program.

Further characteristics and advantages of the invention will become more apparent from the description of a preferred, but not exclusive, embodiment of the emulsifying device for emulsifying milk according to the invention, which is illustrated by way of approximate and non-limiting example in the attached drawings, of which:
Figure 1 is a section view of the emulsifying device, connected to the coffee machine, in accordance with a first preferred embodiment of the invention.
Figure 2 is a section view of the emulsifying device, connected to the coffee machine, in accordance with a second preferred embodiment of the invention.
Figure 3 is a partially exploded section view of the emulsifying device appearing in Figure 1;
Figure 4 is a section view of the emulsifying device of Figure 1, disengaged from the coffee machine.

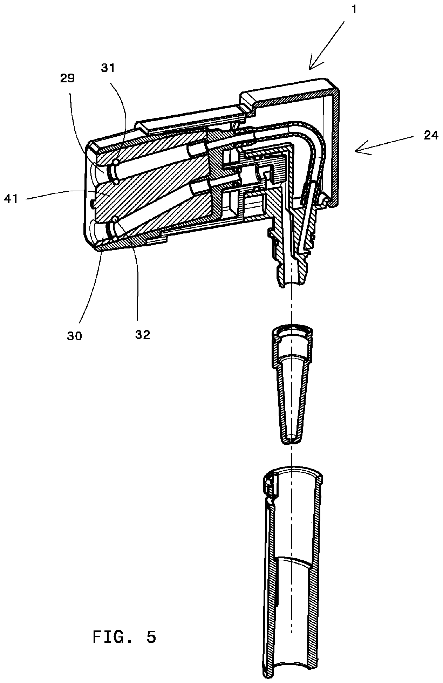

Figure 5 is a partially exploded section view of the emulsifying device appearing in Figure 2;

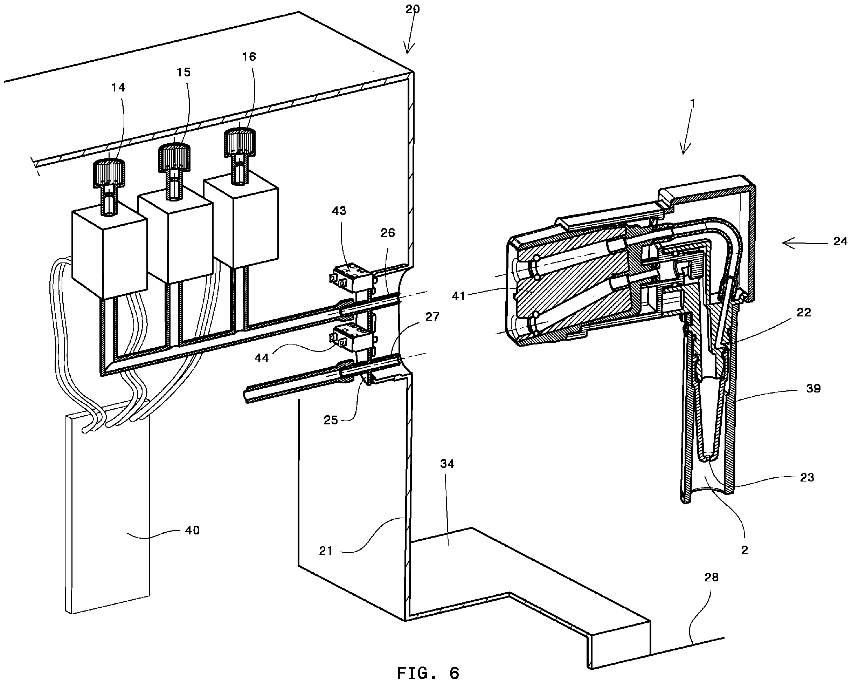

Figure 6 is a section view of the emulsifying device of Figure 2, disengaged from the coffee machine.

Equivalent parts in the various preferred embodiments of the invention shall be indicated with the same reference number herein below.

With reference to the figures cited, an emulsifying device for emulsifying milk is shown and indicated in its entirety by reference number 1.

The emulsifying device 1 is connectable to a coffee machine 20 in the manner described herein below.

The coffee machine 20 comprises a controller 40, a control panel (unillustrated) provided with an on/off button and selection buttons for the dispensing cycle, specific means for generating steam (unillustrated), specific means for heating water (unillustrated), and an infusion unit (unillustrated) connected to the water heating means and to an external coffee dispenser (unillustrated).

The above-mentioned components of the coffee machine 20 are housed in an outer frame 21 of the coffee machine 20.

The emulsifying device 1 comprises a Venturi mixing chamber 2, a circuit 3 for supplying air and having an air outlet 22 connected to the mixing chamber, and a circuit 4 for supplying steam and having a steam outlet 23 connected to the mixing chamber 2.

The circuit for supplying air 3 advantageously has a first air inlet line 5 equipped with a first shut-off solenoid valve 8, and at least a second air inlet line 6 equipped with a second shut-off solenoid valve 9.

Preferably, the circuit for supplying air 3 also has a third air inlet line 7 equipped with a third shut-off solenoid valve 10.

The circuit for supplying air 3 further comprises a manifold 42 to which the air inlet lines 5, 6 and 7 are connected.

Advantageously, the second air inlet line 6 has a minimum cross-sectional area 12 that is larger than the minimum cross-sectional area 11 of the first air inlet line 5. If provided, the third air inlet line 7 has, in turn, a minimum cross-sectional area 13 that is larger than the minimum cross-sectional area 12 of the second air inlet line 6.

The minimum cross-sectional areas 11, 12, 13 can be provided in the air inlet lines 5, 6, 7, upstream or downstream of the solenoid valves 8, 9, 10.

The inlet end of each air inlet line 5, 6, 7 is in communication with the atmospheric air.

The solenoid valves 8, 9, 10 can be controlled by the controller 40 of the coffee machine 20.

The inlet lines 5, 6, 7 are equipped with air filters 14, 15, 16 preferably positioned upstream of the solenoid valves 8, 9, 10 and particularly at the inlet end of the air inlet lines 5, 6, 7.

The circuit for supplying air 3 is subdivided into a first section 3a and a second section 3b, said sections being disconnectably connected to each other.

The first section 3a of the circuit for supplying air 3 comprises the air inlet lines 5, 6, 7, the solenoid valves 8, 9, 10 and the manifold 42.

The second section 3b of the circuit for supplying air 3 comprises the outlet 22 of the circuit for supplying air 3.

Also the circuit for supplying steam 4 comprises a first section 4a and a second section 4b, said sections being disconnectably connected to each other.

The first section 4a of the circuit for supplying steam 4 comprises an inlet (unillustrated) of the circuit for supplying steam 4 connected to the means for generating steam present inside the frame 21 of the coffee machine 20.

The second section 4b of the circuit for supplying steam 4 comprises the outlet 23 of the circuit for supplying steam 4.

The first section 3a of the circuit for supplying air 3 and the first section 4a of the circuit for supplying steam 4 are mounted inside the frame 21 of the coffee machine 20.

The second section 3b of the circuit for supplying air 3 and the second section 4b of the circuit for supplying steam 4 are instead mounted jointly to the mixing chamber 2 in a supporting body 24 external to the frame 21.

The frame 21 of the coffee machine 20 supports a connector 25 that exhibits a connection fitting 26 between the first section of the circuit for supplying air 3a and the second section of the circuit for supplying air 3b, and a connection fitting 27 between the first section of the circuit for supplying steam 4a and the second section 4b of the circuit for supplying steam 4.

The connector 25 has one part that is inside the frame 21 and one part that extends outside the frame 21 through special openings in the thickness of the front wall of the frame 21.

At least in the part outside the frame, the connection fittings 26 and 27 of the connector 25 extend rectilinearly in a direction parallel to the supporting surface 28 of the coffee machine 20.

The supporting body 24 is disconnectably connected to the connector 25.

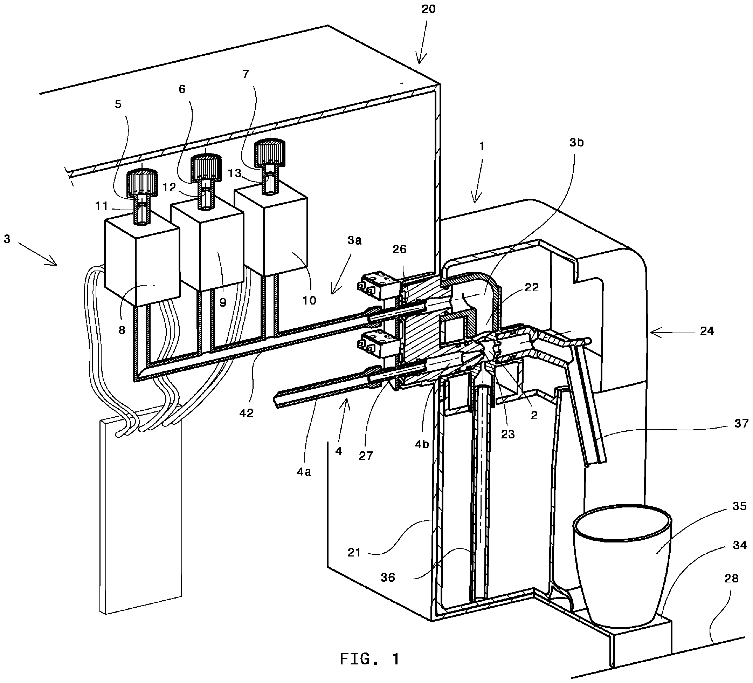

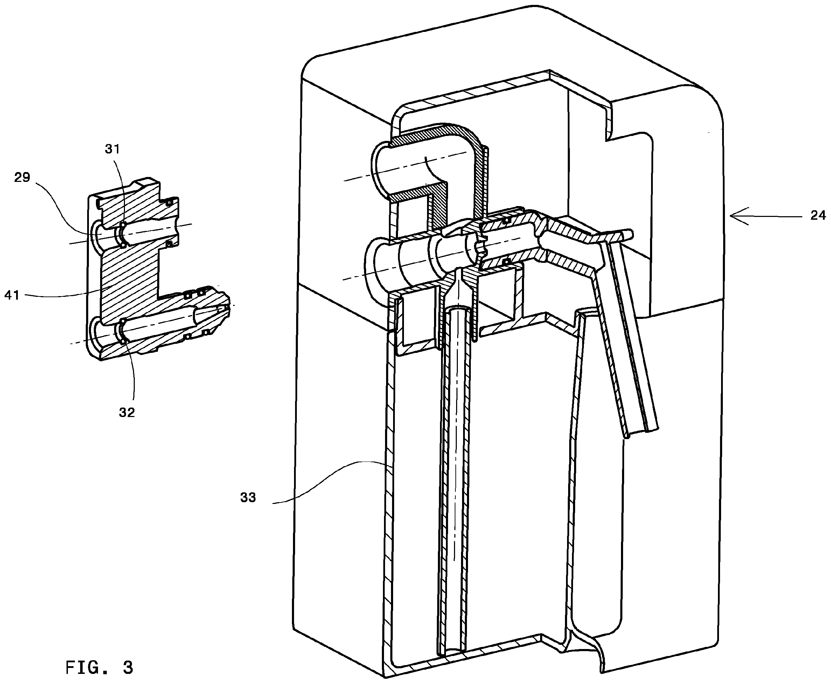

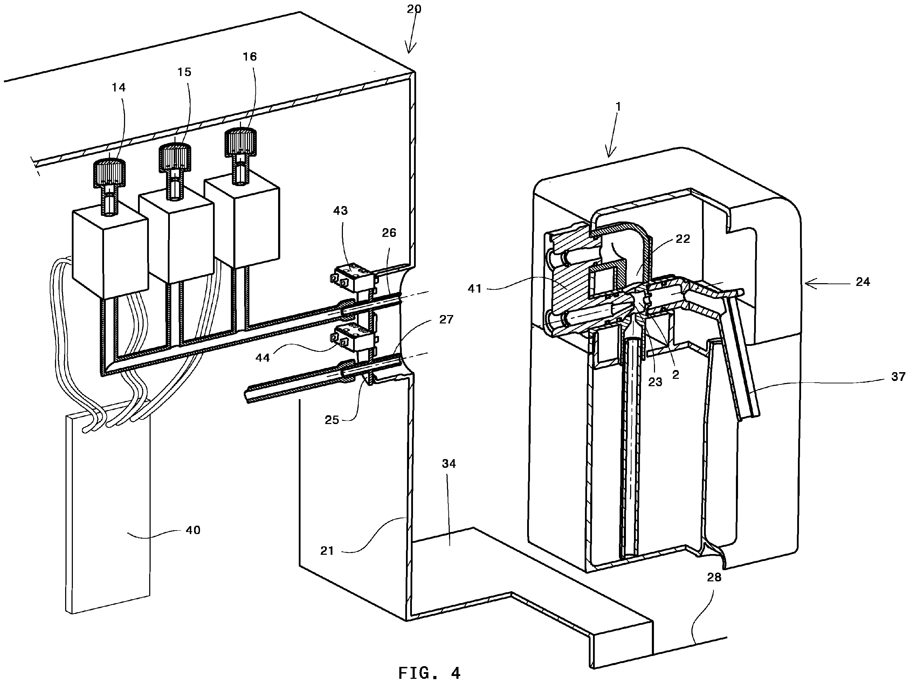

The sleeves 29, 30 are preferably realized as a single piece 41.With reference to the solution illustrated in Figures 1, 3 and 4, this piece 41 is also disengageable from the rest of the supporting body 24, the inside of which thus proves to be more easily accessible for inspection and cleaning.

The supporting body 24 is connectable to the connector 25 with a movement according to a connection axis parallel to the supporting surface 28 of the coffee machine 20.

In the embodiment of the invention illustrated in Figure 1, the supporting body 24 engages with a milk container 33.In this case, the supporting body 24 also supports a milk supply line 36 that is connected to the mixing chamber 2 and extends into the milk container 33 to the bottom thereof, and a dispensing line 37 that is also connected to the mixing chamber 2.The outlet 23 of the circuit for supplying steam 4 is shaped in the form of a Venturi tube so as to generate a drop in pressure in the mixing chamber 2 which draws air suctioned from the circuit for supplying air 3 and milk suctioned from the milk supply line 36 into the mixing chamber 2. The supporting body 24 is positioned in front of the front wall of the frame 21 and it functions particularly as a cover for the milk container 33, which, in turn, rests on a special supporting surface 34 that projects out in front of the frame 21 from the base of the coffee machine 20.The dispensing line 37 projects out from the side of the milk container 33 and over an area of the supporting surface 34 designed for the positioning of a cup 35 for collecting the product dispensed by the dispensing line 37.

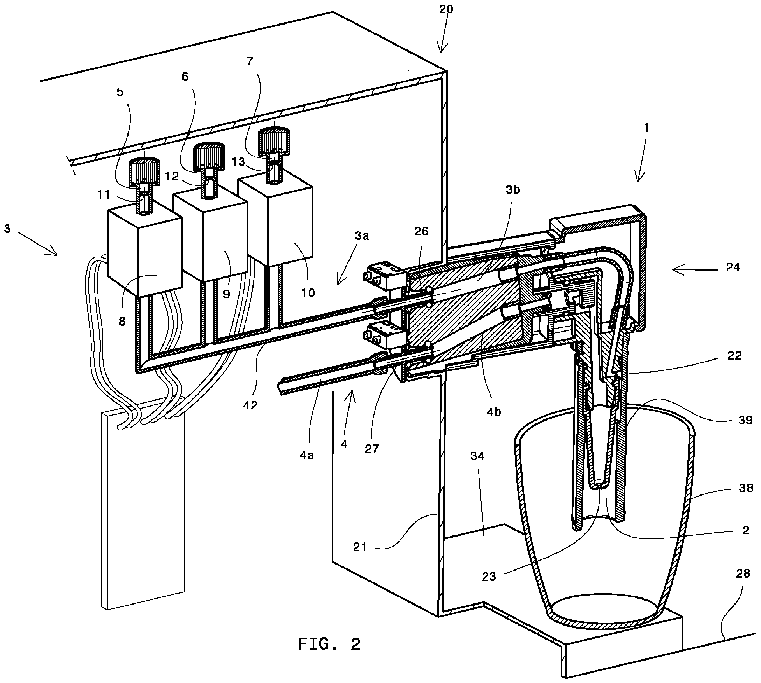

In the embodiment of the invention illustrated in Figure 2, the supporting body 24 has the mixing chamber 2 at a lower end thereof, designed to be directly inserted in a milk container 38.The mixing chamber 2 is delimited by an external tube 39 that surrounds the outlet 23 of the circuit for supplying steam 4 and the outlet 22 of the circuit for supplying air 3. The outlet 23 of the circuit for supplying steam 4 is shaped in the form of a Venturi tube so as to generate a drop in pressure in the mixing chamber 2 which draws air suctioned from the circuit for supplying air 3 into the mixing chamber 2.The connector 25 supports the supporting body 24 in a suspended manner at a certain distance above the supporting surface 34, where the milk container 38 can be positioned, the milk container 38 representing an independent element, distinct and separate from the supporting body 24.

The operation of the emulsifying device is as follows.

Firstly, it should be specified that the controller 40 is capable of recognizing the presence of an emulsifying device 1 connected to the coffee machine, by means of first sensor means 43 of a known type (e.g. of a mechanical or magnetic type), and also of recognizing the type of emulsifying device 1 that is present, by means of second sensor means 44, also of a known type (e.g. of a mechanical or magnetic type).

The controller of the coffee machine 20 is programmed with a first, a second and at least a third milk dispensing program that differ in the status of at least one solenoid valve 8, 9, 10.

Preferably, with reference above all to the application illustrated in Figure 1, the controller is also programmed with a washing program that differs in the status of at least one solenoid valve 8, 9, 10 with respect to said first, second and third milk dispensing programs.

The user can select the desired program on the control panel of the coffee machine. Let us first suppose that the emulsifying device, as illustrated, comprises the three air inlet lines 5, 6, 7 and the three solenoid valves 8, 9, 10.

In this case, by way of example, the first milk dispensing program comprises the permanent closure of all the solenoid valves 8, 9, 10, the second milk dispensing program comprises the permanent opening of the first solenoid valve 8 and the permanent closure of the second and third solenoid valves 9 and 10, and the third milk dispensing program comprises the permanent opening of the second solenoid valve 9 and the permanent closure of the first solenoid valve 8 and the third solenoid valve 10.

The washing program instead comprises the permanent opening at least of the third solenoid valve 10, particularly the permanent opening of the third solenoid valve 10 and the permanent closure of the first solenoid valve 8 and the second solenoid valve 9.

With the first milk dispensing program, the milk is heated by the steam, but not frothed, as all the air inlet lines 5, 6, 7 are closed.

With the second dispensing program, the milk is heated by the steam and slightly frothed by a flow of air suctioned into the mixing chamber 2 by Venturi effect and coming from the first air inlet line 5.

With the third dispensing program, the milk is heated by the steam and frothed to a greater degree by a greater flow of air suctioned into the mixing chamber 2 by Venturi effect and coming from the second air inlet line 6, the minimum cross-sectional area 12 of which is larger than the minimum cross-sectional area 11 of the first air inlet line 5.

As regards the washing program, and referring particularly to the embodiment of the invention illustrated in Figure 1, the minimum cross-sectional area 13 of the third air inlet line 7 is sufficient to create a flow of air that compensates for the drop in pressure that is created by Venturi effect in the mixing chamber 2, without triggering suctioning of milk from the milk supply line 36. Selective opening of the third solenoid valve 10 is thus capable of generating a flow of a mixture of steam and air for washing, which cleans the mixing chamber 2.The same washing program can obviously be adopted for the embodiment of the invention illustrated in Figure 2, where, in any case, there is no risk of undesired suctioning of milk. Let us now suppose that the emulsifying device comprises only two air inlet lines, a respective solenoid valve being associated with each air inlet line. The first air inlet line has a smaller minimum cross-sectional area and the second air inlet line has a larger minimum cross-sectional area, for example, referring particularly to the embodiment illustrated in Figure 1, a minimum cross-sectional area sufficient to generate a flow of air that compensates for the drop in pressure that is created by Venturi effect in the mixing chamber 2, without triggering suctioning of milk from the milk supply line 36.

In this case, by way of example, the first milk dispensing program comprises the permanent closure of the two solenoid valves, the second milk dispensing program comprises the temporary opening of the first solenoid valve and the permanent closure of the second solenoid valve, the third milk dispensing program comprises the temporary opening of the first solenoid valve for a cumulative period of time differing from the second program and the permanent closure of the second solenoid valve, and the washing program comprises the permanent opening at least of the second solenoid valve and particularly only of the second solenoid valve. More precisely, in a milk dispensing cycle of a duration of X seconds, with the second milk dispensing program, the first solenoid valve will remain closed for a total of y1 seconds and open for a total of z1 seconds, where X is equal to y1 plus z1, whereas with the third milk dispensing program, the first solenoid valve will remain closed for a total of y2 seconds and open for a total of z2 seconds, where X is equal to y2 plus z2 and z2 is greater than z1. The variation in the cumulative period of time in which the first solenoid valve is open can be obtained - with the number of switches in the status of the first solenoid valve in time X for execution of the milk dispensing cycle being equal - differentiating the interval of time that the first solenoid valve remains in the open state and in the closed state in the second and the third milk dispensing program. For example, for the second milk dispensing program, each open state of the first solenoid valve will be of the same duration, each closed state of the first solenoid valve will be of the same duration, and the duration of each open state will be equal to the duration of each closed state. For the second milk dispensing program, which instead provides for a more substantial formation of froth compared to that of the first milk dispensing program, each open state of the first solenoid valve will be of the same duration, each closed state of the first solenoid valve will be of the same duration, but the duration of each open state will be longer than the duration of each closed state. Obviously, adjustment of the degree of froth can be carried out by controlling the solenoid valves in any other different manner.

Clearly, the number of solenoid valves, two or more, and the manner in which they are controlled, can be changed according to needs.

As a result, with a simple and economical system, the emulsifying device is capable of varying the amount of milk froth in an extremely accurate manner.

No particular skills are required of the user for successfully performing the procedure, given that the user's contribution is limited to selecting the desired degree of froth on the control panel.

The emulsifying device thus conceived is susceptible to numerous modifications and variants, all of which falling within the scope of the inventive concept. Moreover, all details may be replaced with other technically equivalent elements. The materials used, as well as the dimensions, may in practice be of any type, according to needs and the state of the art.

## Claims

1. An emulsifying device (1) for emulsifying milk, comprising a Venturi mixing chamber (2), a circuit (3) for supplying air and having an air outlet (22) connected to the mixing chamber (2), and a circuit (4) for supplying steam and having a steam outlet (23) connected to the mixing chamber, **characterized in that** said circuit for supplying air (3) comprises a first air inlet line (5) equipped with a first shut-off solenoid valve (8) and at least a second air inlet line (6) equipped with a second shut-off solenoid valve (9), said first and second air inlet lines (5, 6) having a different minimum cross-sectional area (11, 12), and **in that** said first shut-off solenoid valve (8) and said second shut-off solenoid valve (9) are controlled for adjusting the degree of milk froth.

2. The emulsifying device (1) for emulsifying milk according to the preceding claim, **characterized in that** said circuit for supplying air (3) has a third air inlet line (7) equipped with a third shut-off solenoid valve (10) and having a minimum cross-sectional area (13) differing from the minimum cross-sectional area (11, 12) of said first and second air inlet lines (5, 6).

3. The emulsifying device (1) for emulsifying milk according to any one of the preceding claims, **characterized in that** each air inlet line (5, 6, 7) is equipped with a respective air filter (14, 15, 16).

4. The emulsifying device (1) for emulsifying milk according to any one of the preceding claims, **characterized in that** said circuit for supplying air (3) comprises a first section (3a) comprising said first air inlet line (5), said first solenoid valve (8), said at least a second air inlet line (6), and said at least a second solenoid valve (9), said first section (3a) being disconnectably connected to a second section (3b) comprising said air outlet (22).

5. The emulsifying device (1) for emulsifying milk according to any one of the preceding claims, **characterized in that** said circuit for supplying steam (4) comprises a first section (4a) comprising said steam inlet and disconnectably connected to a second section (4b) comprising said steam outlet (23).

6. A coffee machine (20), **characterized in that** it comprises an emulsifying device (1) in accordance with any one of the preceding claims.

7. The coffee machine (20) according to the preceding claim, **characterized in that** it comprises an outer frame (21) within which said first section of the circuit for supplying steam (4a) and said first section of the circuit for supplying air (3a) are mounted.

8. The coffee machine (20) according to the preceding claim, **characterized in that** said second section of the circuit for supplying air (3b), said second section of the circuit for supplying steam (4b) and said mixing chamber (2) are mounted in a supporting body (24) external to said frame (21).

9. The coffee machine (20) according to the preceding claim, **characterized in that** said frame (21) supports a connector (25) arranged through the wall thickness of said frame (21) and exhibiting a connection fitting (26) between said first and second sections of the air circuit (3a, 3b) and a connection fitting (27) between said first and second sections of the steam circuit (4a, 4b).

10. The coffee machine (20) according to the preceding claim, **characterized in that** said supporting body (24) is disconnectably connected to said connector (25).

11. The coffee machine (20) according to any one of claims 8 to 10, **characterized in that** said supporting body (24) is supported by a milk container (33) having a milk supply line (36) having a milk outlet connected to said mixing chamber (2).

12. The coffee machine (20) according to any one of claims 6 to 11, **characterized in that** it has an internal controller programmed with a first, a second and at least a third milk dispensing program that differ in the status of at least one of the solenoid valves (8, 9, 10).

13. The coffee machine (20) according to the preceding claim, **characterized in that** said internal controller is programmed with a washing program that differs in the status of at least one of the solenoid valves (8, 9, 10) with respect to said first, second and at least a third milk dispensing program.

14. The coffee machine (20) according to the preceding claim, wherein said emulsifying device (1) comprises only two solenoid valves, **characterized in that** said first milk dispensing program comprises the permanent closure of the two solenoid valves, said second milk dispensing program comprises the temporary opening of said first solenoid valve and the permanent closure of said second solenoid valve, said third milk dispensing program comprises the temporary opening of said first solenoid valve for a cumulative period of time differing from the second program and the permanent closure of said second solenoid valve, and said washing program comprises the permanent opening at least of said second solenoid valve.

15. The coffee machine (20) according to claim 13, wherein said emulsifying device (1) comprises three solenoid valves (8, 9, 10), **characterized in that** said first milk dispensing program comprises the permanent closure of said first, second and third solenoid valves (8, 9, 10), said second milk dispensing program comprises the permanent opening of said first solenoid valve (8) and the permanent closure of said second and third solenoid valves (9, 10), said third milk dispensing program comprises the permanent opening of said second solenoid valve (9) and the permanent closure at least of the third solenoid valve (10), and said washing program comprises the permanent opening at least of said third solenoid valve (10).

## Patentansprüche

1. Emulgiervorrichtung (1) zum Emulgieren von Milch, umfassend eine Venturi-Mischkammer (2), einen Kreislauf (3) für die Luftzufuhr und aufweisend einen Luftauslass (22), verbunden mit der Mischkammer (2), und einen Kreislauf (4) für die Dampfzufuhr und aufweisend einen Dampfauslass (23), verbunden mit der Mischkammer, **dadurch gekennzeichnet, dass** der Kreislauf für die Luftzufuhr (3) eine erste Lufteinlassleitung (5) umfasst, ausgestattet mit einem ersten Absperrmagnetventil (8), und mindestens eine zweite Lufteinlassleitung (6), ausgestattet mit einem zweiten Absperrmagnetventil (9), wobei die erste und die zweite Lufteinlassleitung (5, 6) einen unterschiedlichen Mindestquerschnittsbereich (11, 12) aufweisen, und dadurch, dass das erste Absperrmagnetventil (8) und das zweite Absperrmagnetventil (9) gesteuert werden, um den Milchschaumgrad zu regeln.

2. Emulgiervorrichtung (1) zum Emulgieren von Milch nach dem vorhergehenden Anspruch, **dadurch gekennzeichnet, dass** der Kreislauf für die Luftzufuhr (3) eine dritte Einlassleitung (7) umfasst, ausgestattet mit einem dritten Absperrmagnetventil (10) und aufweisend einen Mindestquerschnittsbereich (13), der sich vom Mindestquerschnittsbereich (11, 12) der ersten und der zweiten Einlassleitung (5, 6) unterscheidet.

3. Emulgiervorrichtung (1) zum Emulgieren von Milch nach einem der vorhergehenden Ansprüche, **dadurch gekennzeichnet, dass** eine jede Einlassleitung (5, 6, 7) mit einem jeweiligen Luftfilter (14, 15, 16) ausgestattet ist.

4. Emulgiervorrichtung (1) zum Emulgieren von Milch nach einem der vorhergehenden Ansprüche, **dadurch gekennzeichnet, dass** der Kreislauf für die Luftzufuhr (3) einen ersten Abschnitt (3a) umfasst, umfassend die erste Lufteinlassleitung (5), das erste Magnetventil (8), die mindestens zweite Lufteinlassleitung (6) und das mindestens zweite Magnetventil (9), wobei der erste Abschnitt (3a) trennbar mit einem zweiten Abschnitt (3b) verbunden ist, umfassend den Luftauslass (22).

5. Emulgiervorrichtung (1) zum Emulgieren von Milch nach einem der vorhergehenden Ansprüche, **dadurch gekennzeichnet, dass** der Kreislauf für die Dampfzufuhr (4) einen ersten Abschnitt (4a) umfasst, umfassend den Dampfeinlass, und trennbar verbunden mit einem zweiten Abschnitt (4b), umfassend den Dampfauslass (23).

6. Kaffeemaschine (20), **dadurch gekennzeichnet, dass** sie eine Emulgiervorrichtung (1) nach einem der vorhergehenden Ansprüche umfasst.

7. Kaffeemaschine (20) nach dem vorhergehenden Anspruch, **dadurch gekennzeichnet, dass** sie einen Außenrahmen (21) umfasst, innerhalb dessen der erste Abschnitt des Kreislaufs für die Dampfzufuhr (4a) und der erste Abschnitt des Kreislaufs für die Luftzufuhr (3a) montiert sind.

8. Kaffeemaschine (20) nach dem vorhergehenden Anspruch, **dadurch gekennzeichnet, dass** der zweite Abschnitt des Kreislaufs für die Luftzufuhr (3b), der zweite Abschnitt des Kreislaufs für die Dampfzufuhr (4b) und die Mischkammer (2) in einem Trägerkörper (24) außerhalb des Rahmens (21) montiert sind.

9. Kaffeemaschine (20) nach dem vorhergehenden Anspruch, **dadurch gekennzeichnet, dass** der Rahmen (21) einen Verbinder (25) trägt, der durch die Wanddicke des Rahmens (21) angeordnet ist und eine Verbindungsverschraubung (26) zwischen dem ersten und dem zweiten Abschnitt des Luftkreislaufs (3a, 3b) und eine Verbindungsverschraubung (27) zwischen dem ersten und dem zweiten Abschnitt des Dampfkreislaufs (4a, 4b) aufweist.

10. Kaffeemaschine (20) nach dem vorhergehenden Anspruch, **dadurch gekennzeichnet, dass** der Trägerkörper (24) trennbar mit dem Verbinder (25) verbunden ist.

11. Kaffeemaschine (20) nach einem der Ansprüche 8 bis 10, **dadurch gekennzeichnet, dass** der Trägerkörper (24) von einem Milchbehälter (33) getragen wird, aufweisend eine Milchzufuhrleitung (36), aufweisend einen Milchauslass, der mit der Mischkammer (2) verbunden ist.

12. Kaffeemaschine (20) nach einem der Ansprüche 6 bis 11, **dadurch gekennzeichnet, dass** sie eine interne Steuerung aufweist, programmiert mit einem ersten, einem zweiten und mindestens einem dritten Milchausgabeprogramm, die sich in Bezug auf den Zustand von mindestens einem der Magnetventile (8, 9, 10) unterscheiden.

13. Kaffeemaschine (20) nach dem vorhergehenden Anspruch, **dadurch gekennzeichnet, dass** die interne Steuerung mit einem Reinigungsprogramm programmiert ist, das sich in Bezug auf den Zustand von mindestens einem der Magnetventile (8, 9, 10) vom ersten, zweiten und mindestens dritten Milchausgabeprogramm unterscheidet.

14. Kaffeemaschine (20) nach dem vorhergehenden Anspruch, wobei die Emulgiervorrichtung (1) nur zwei Magnetventile umfasst, **dadurch gekennzeichnet, dass** das erste Milchausgabeprogramm das permanente Schließen der zwei Magnetventile umfasst, das zweite Milchausgabeprogramm das vorübergehende Öffnen des ersten Magnetventils und das permanente Schließen des zweiten Magnetventils umfasst, das dritte Milchausgabeprogramm das vorübergehende Öffnen des ersten Magnetventils für einen kumulativen Zeitraum, der sich vom zweiten Programm unterscheidet, und das permanente Schließen des zweiten Magnetventils umfasst, und das Reinigungsprogramm das permanente Öffnen mindestens des zweiten Magnetventils umfasst.

15. Kaffeemaschine (20) nach Anspruch 13, wobei die Emulgiervorrichtung (1) drei Magnetventile (8, 9, 10) umfasst, **dadurch gekennzeichnet, dass** das erste Milchausgabeprogramm das permanente Schließen des ersten, zweiten und dritten Magnetventils (8, 9, 10) umfasst, das zweite Milchausgabeprogramm das permanente Öffnen des ersten Magnetventils (8) und das permanente Schließen des zweiten und dritten Magnetventils (9, 10) umfasst, das dritte Milchausgabeprogramm das permanente Öffnen des zweiten Magnetventils (9) und das permanente Schließen mindestens des dritten Magnetventils (10) umfasst, und das Reinigungsprogramm das permanente Öffnen mindestens des dritten Magnetventils (10) umfasst.

## Revendications

1. Dispositif d'émulsion (1) pour l'émulsion de lait, comprenant une chambre de mélange (2) à Venturi, un circuit (3) servant à alimenter en air et comportant une sortie d'air (22) reliée à la chambre de mélange (2), et un circuit (4) servant à alimenter en vapeur et comportant une sortie de vapeur (23) reliée à la chambre de mélange, **caractérisé en ce que** ledit circuit (3) d'alimentation en air comprend un premier conduit (5) d'entrée d'air équipé d'une première électrovanne de retenue (8) et au moins un second conduit (6) d'entrée d'air équipé d'une seconde électrovanne de retenue (9), lesdits premier et second conduits (5, 6) d'entrée air comportant une zone (11, 12) à section transversale minimum différente, et **en ce que** ladite première électrovanne de retenue (8) et ladite seconde électrovanne de retenue (9) sont commandées pour régler le degré de mousse de lait.

2. Dispositif d'émulsion (1) pour l'émulsion de lait selon la revendication précédente, **caractérisé en ce que** ledit circuit (3) d'alimentation en air comporte un troisième conduit (7) d'entrée d'air équipé d'une troisième électrovanne de retenue (10) et comprenant une zone (13) à section transversale minimum différant de la zone (11, 12) à section transversale minimum desdits premier et second conduits (5, 6) d'entrée d'air.

3. Dispositif d'émulsion (1) pour l'émulsion de lait selon l'une quelconque des revendications précédentes, **caractérisé en ce que** chaque conduit (5, 6, 7) d'entrée d'air est équipé d'un filtre à air (14, 15, 16) respectif.

4. Dispositif d'émulsion (1) pour l'émulsion de lait selon l'une quelconque des revendications précédentes, **caractérisé en ce que** ledit circuit (3) d'alimentation en air comprend une première section (3a) comprenant ledit premier conduit (5) d'entrée d'air, ladite première électrovanne de retenue (8), ledit au moins second conduit (6) d'entrée d'air et ladite au moins une seconde électrovanne de retenue (9), ladite première section (3a) étant reliée de façon déconnectable à une seconde section (3b) comprenant ladite sortie d'air (22).

5. Dispositif d'émulsion (1) pour l'émulsion de lait selon l'une quelconque des revendications précédentes, **caractérisé en ce que** ledit circuit (4) d'alimentation en vapeur comprend une première section (4a) comprenant ladite entrée de vapeur et reliée de façon déconnectable à une seconde section (4b) comprenant ladite entrée de vapeur (23).

6. Machine à café (20) **caractérisée en ce qu'**elle comprend un dispositif d'émulsion (1) selon l'une quelconque des revendications précédentes.

7. Machine à café (20) selon la revendication précédente, **caractérisée en ce qu'**elle comprend un châssis extérieur (21) à l'intérieur duquel sont montées ladite première section du circuit servant à alimenter en vapeur (4a) et ladite première section du circuit servant à alimenter en air (3a).

8. Machine à café (20) selon la revendication précédente, **caractérisée en ce que** ladite seconde section du circuit servant à alimenter en air (3b), ladite seconde section du circuit servant à alimenter en vapeur (4b) et ladite chambre de mélange (2) sont montées dans un corps de support (24) extérieur au dit châssis (21).

9. Machine à café (20) selon la revendication précédente, **caractérisée en ce que** ledit châssis (21) supporte un connecteur (25) disposé à travers l'épaisseur de cloison dudit châssis (21) et présentant un raccord de connexion (26) entre lesdites première et seconde sections du circuit d'air (3a, 3b) et un raccord de connexion (27) entre lesdites première et seconde sections du circuit à vapeur (4a, 4b) .

10. Machine à café (20) selon la revendication précédente, **caractérisée en ce que** ledit corps de support (24) est relié de façon déconnectable au dit connecteur (25).

11. Machine à café (20) selon l'une quelconque des revendications de 8 à 10, **caractérisée en ce que** ledit corps de support (24) est supporté par un récipient à lait (33) comportant un conduit (36) d'alimentation en lait comportant une sortie de lait reliée à ladite chambre de mélange (2).

12. Machine à café (20) selon l'une quelconque des revendications de 6 à 11, **caractérisée en ce qu'**elle comporte un contrôleur interne programmé avec un premier, un second et au moins un troisième programme de distribution de lait différant selon l'état d'au moins une des électrovannes de retenue (8, 9, 10).

13. Machine à café (20) selon la revendication précédente, **caractérisée en ce que** ledit contrôleur interne est programmé avec un programme de lavage différant selon l'état d'au moins une des électrovannes de retenue (8, 9, 10) par rapport auxdits premier, second et au moins un troisième programme de distribution de lait.

14. Machine à café (20) selon la revendication précédente, dans laquelle ledit dispositif d'émulsion (1) comprend uniquement deux électrovannes de retenue, **caractérisée en ce que** ledit premier programme de distribution de lait comprend la fermeture permanente des deux électrovannes de retenue, ledit second programme de distribution de lait comprend l'ouverture temporaire de ladite première électrovanne de retenue et la fermeture permanente de ladite seconde électrovanne de retenue, ledit troisième programme de distribution de lait comprend l'ouverture temporaire de ladite première électrovanne de retenue pendant une période de temps cumulative différant du second programme et la fermeture permanente de ladite seconde électrovanne de retenue, et ledit programme de lavage comprend l'ouverture permanente de ladite au moins seconde électrovanne de retenue.

15. Machine à café (20) selon la revendication 13, dans laquelle ledit dispositif d'émulsion (1) comprend trois électrovannes de retenue (8, 9, 10), **caractérisée en ce que** ledit premier programme de distribution de lait comprend la fermeture permanente desdites première, seconde et troisième électrovannes de retenue (8, 9, 10), ledit second programme de distribution de lait comprend l'ouverture permanente de ladite première électrovanne de retenue (8) et la fermeture permanente desdites seconde et troisième électrovannes de retenue (9, 10), ledit troisième programme de distribution de lait comprend l'ouverture permanente de ladite seconde électrovanne de retenue (9) et la fermeture permanente d'au moins la troisième électrovanne de retenue (10), et ledit programme de lavage comprend l'ouverture permanente de ladite au moins troisième électrovanne de retenue (10).
